# EUROPEAN PATENT SPECIFICATION

(11) **EP 3 013 610 B1**
(45) Date of publication and mention of the grant of the patent: **17.04.2019**
(21) Application number: 14738576.9
(22) Date of filing: 26.06.2014
(51) Int. Cl.: B60C 17/06

(54) **RUN-FLAT DEVICE**
NOTLAUFVORRICHTUNG
DISPOSITIF DE ROULAGE À PLAT

(30) Priority: 26.06.2013 GB 201311338
(43) Date of publication of application: 04.05.2016
(73) Proprietor: Runflat International Limited, Cradley Heath, West Midlands B64 5QY (GB)
(72) Inventor: CHANDLER, Trevor, Cradley Heath West Midlands B64 5QY (GB)
(74) Representative: Pulieri, Gianluca Antonio
(86) International application number: PCT/GB2014/051955
(87) International publication number: WO 2014/207471

(56) References cited:
- WO-A1-2013/021198
- US-A- 3 250 310
- US-A- 3 381 737
- US-A- 4 773 461

## Description

The present invention relates to a device for use with inflatable tyres mounted on vehicle wheels, fitted within a tyre that enables the wheel to run with a deflated tyre. Such devices are known as 'run-flat' devices.

Run flat devices are designed to resist the effects of sudden deflation when a tyre is punctured, such that the tyre does not become shredded or thrown off a wheel.

A known run flat device is disclosed in WO-A-2013021198. It is known to provide run-flat devices for wheels in which the run flat device is fitted within a tyre to a metal rim of a wheel. The run flat device is in the form of an annular body adapted to slip circumferentially on the metal rim when the tyre deflates and the tyre is brought into contact with an outer face of the annular body of the run flat device. This slippage allows the tyre to slip on the wheel rim whilst ensuring little or no slippage of the tyre relative to the outer circumference of the annular body of the run-flat device.

It is also known to provide arrangements in which when the tyre deflates and the run flat device acts to secure the sides of the tyre in position relative to the wheel.

The present invention relates to an improved form of this second arrangement.

According to a first aspect, the present invention comprises a run flat device, according to claim 1, for fitting to the outer circumference of a wheel inside an inflatable tyre, said device comprising a resilient substantially annular body having a central axis, in which the annular body extends outwardly at an inner surface to form first and second tyre abutting members, an internal face of the annular body being provided with a recess extending between the first and second tyre abutting members, the recess being substantially defined by planar inner surfaces of the respective tyre abutting members, and the planar inner surfaces being disposed at an angle to one another.

This has as an advantage that force directed inwardly towards the inner face of the annular body, as occurs in the event of a puncture or other loss of pressure in a wheel assembly, is displaced/transferred axially outwardly into the first and second tyre abutting members to ensure that the tyre wall is held between the wheel rim and the run flat device.

The recess is generally triangular in shape. This has as a further advantage that the recess is relatively convenient to form in the annular body allowing for increased ease of production of the annular body.

The annular body is provided beyond the first and second tyre abutting members with first and second planar side surfaces. More preferably the first and second planar side surfaces are substantially parallel to one another.

The recess extends only a short way into the annular body, less than half way.

The substantially planar inner surfaces of the respective tyre abutting members are connected to one another by a curvilinear or arcuate surface.

Each of the substantially planar inner surfaces of the respective tyre abutting members is connected to the inner surface of the annular body by a curvilinear or arcuate surface.

Preferably the tyre abutting members are of corresponding section.

Preferably one or both of the tyre abutting members extend uninterrupted along a substantial part of a circumferential length of the annular body. More preferably, one or both of the tyre abutting members extend along the circumferential length of the body.

Preferably, the annular body comprises a split ring. Alternatively, the annular body comprises a plurality of arcuate segments. Preferably the annular body comprises three arcuate segments.

Preferably each of the plurality of segments are identical in shape. Preferably a clamping means located between adjacent segments imparts to each segment a circumferential clamping force and an axial clamping force to urge the segments circumferentially and axially towards each other.

According to a second aspect of the invention a wheel assembly comprises a wheel rim and an inflatable tyre, a run-flat device according to the first aspect of the invention fitted to the wheel rim and a lubricant provided between the run flat device and an inner surface of the tyre.

Preferably, the run flat device acts on deflation of the tyre to prevent relative movement of a periphery of the tyre with respect to the wheel rim.

According to a third aspect of the invention, a method of forming a wheel assembly comprises the steps of
providing a wheel having a rim and a rear rim portion, a front rim portion releasably securable to the rim, a run flat device in accordance with a first aspect of the invention, and a tyre having front and rear side walls; locating the run flat device within the tyre;
urging the tyre and associated run flat device axially over the wheel rim; and
securing the front rim portion to the wheel rim.

The invention will now be described, by way of example only, in relation to the attached Figures, in which
Figure 1 shows a sectional view through a first embodiment of a run flat device in accordance with the present invention;
Figure 2 shows a sectional view through a second embodiment of a run flat device in accordance with the present invention, shown in position on a wheel assembly; and
Figure 3 shows a side view of a run flat device in accordance with the present invention.

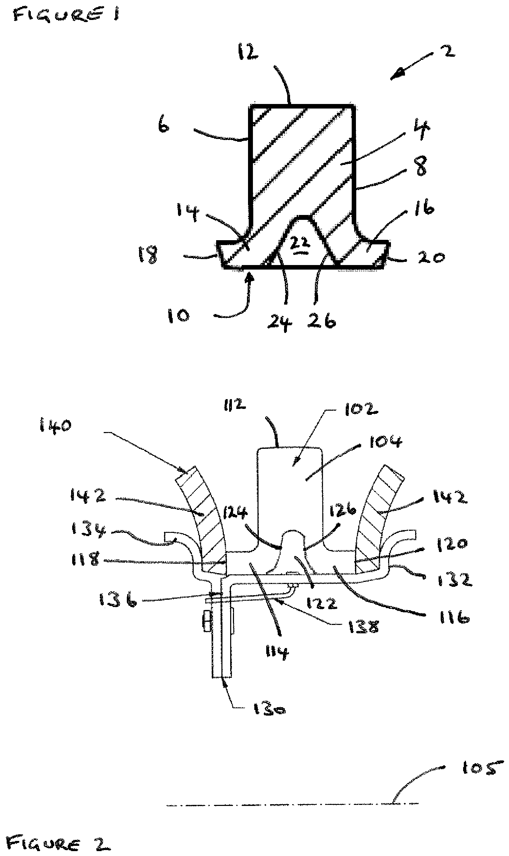

Referring first to Figure 1, a run flat device 2 for fitting to the outer circumference of a wheel inside an inflatable tyre is shown. The run flat device 2 comprises a resilient substantially annular body 4 having a central axis. The annular body 4 can be seen to comprise an internal surface 10 and an outer surface 12. First and second planar side surfaces 6,8 extend from the outer surface 12 of the annular body 4 towards the inner surface 10. Conveniently the first and second side surfaces 6,8 are substantially parallel to one another.

The annular body 4 extends outwardly, at the lower ends of the first and second side surfaces 6,8 to form first and second tyre abutting members 14,16 at the inner surface 10. The first and second tyre abutting members 14,16 extend generally axially parallel to the central axis of the run flat member. The first and second tyre abutting members 14,16 are provided with end surfaces 18,20 which, in use abut an inner surface of a tyre wall.

A recess 22 is provided on the internal surface 10 of the annular body 4, disposed between first and second tyre abutting members 14,16. The recess 22 includes substantially planar inner surfaces 24,26 which can be seen to form first and second inner walls of the respective tyre abutting members 14,16. By 'substantially planar' it will be understood that, as illustrated, the inner surfaces 24,26 are planar along their respective lengths, but have non-planar transitional regions at their respective ends. It can be seen that the first and second inner walls of the respective tyre abutting members 14,16 extend radially outward of upper, outer surfaces of the tyre abutting members 14,16. In addition the planar inner surfaces 24,26 are disposed at an angle to one another, in the illustrated embodiment at an acute angle to one aonther.

Conveniently, the substantially planar inner surfaces 24,26 of the respective tyre abutting members 14,16 are connected by a curvilinear or arcuate surface. Similarly, each of the substantially planar inner surfaces 24,26 of the respective tyre abutting members 14,16 is connected to the inner surface 10 of the annular body 4 by a curvilinear or arcuate surface.

Thus, the recess 22 in Figure 1 is substantially triangular in section. This has as an advantage that the recess 22 is relatively convenient to form in production, for example the moulding, of the annular body. Conveniently, the recess 22 extends only a short way into the annular body, preferably less than half way from the inner surface 10 to the outer surface 12.

It can be seen that in this embodiment, the tyre abutting members 14,16 are of corresponding section. Conveniently one or both, preferably both, of the tyre abutting members 14,16 extend uninterrupted along a substantial part of a circumferential length of the annular body 4. Conveniently, one or both, preferably both, of the tyre abutting members 14,16 extend along the circumferential length of the body 4.

This has as an advantage that force directed inwardly towards the inner surface 10 of the annular body 4, as occurs in the event of a puncture or other loss of pressure in a wheel assembly, is displaced or transferred outwardly into the first and second tyre abutting members 14,16 to ensure that a tyre wall is held between a wheel rim and the run flat device 2. The construction of the tyre abutting members 14,16 is also such as to ensure that the force is directed into an adjacent tyre wall through end surfaces 18,20 and not to cause the tyre abutting members 14,16 to buckle or otherwise direct force other than into the tyre wall.

A second embodiment of a run flat device in accordance with the present invention is shown in Figure 2, located in position on a wheel assembly (shown in part). Similar parts will be referred to by similar reference numerals.

A run flat device 102 is provided comprising a substantially annular body 104 having a central axis 105. The annular body 104 is provided with a recess 122. Substantially planar inner surfaces 124,126 of respective tyre abutting members 114,116 are disposed at an angle to one another and are connected by a curvilinear or arcuate surface. Again, by 'substantially planar' it will be understood that, as illustrated, the inner surfaces 124, 126 are planar along their respective lengths, but have non-planar transitional regions at their respective ends. However the angle of inclination is smaller than that of the previous embodiment such that the transitional curvilinear or arcuate surface connecting each of the planar inner surfaces 124,126 to one another is substantially larger than in the first embodiment. Nevertheless, again it will be noted that the shape of the recess 122 is one that is relatively convenient to form in the production, for example the moulding, of the annular body. In addition, the recess 122 again extends only a short way into the annular body 104, preferably less than half way from the inner surface to the outer surface 112.

The run flat device 102 is shown in position on a two piece bolt together wheel assembly 130 within a tyre 140 (only the walls 142 of the tyre are shown). The wheel assembly 130 comprises a wheel portion 132 and a rim portion 134. It will be understood that in the absence of the rim portion the tyre 140 with the run flat device 102 located within is fitted to the wheel portion 132. The wheel assembly 130 is then completed by securing the rim portion to the wheel portion. Conveniently an O-ring 136 is provided between the wheel portion 132 and the rim portion 134 to ensure there is no air leakage from within the tyre and wheel assembly. As may be seen from Figure 2, the recess 122 is conveniently located over a valve 138 used to inflate and manage air pressure within the tyre and wheel assembly.

It will also be seen that in this arrangement, free ends of the tyre walls 142 are seated between a tyre abutting member 114,116 and a respective wheel rim) provided either as part of the wheel portion 132 or the rim portion 134.

In use, in the event of a puncture, leading to the tyre 140 deflating and being brought into contact with the outer face of the annular body 104 of the run flat device 102, force is directed radially inwardly into the run flat device. This inwardly directed force directed towards the inner face of the annular body 104 is transferred axially outwardly into the first and second tyre abutting members 114,116 to ensure that each of the tyre walls 142 is held between a respective wheel rim and the run flat device 102. It will be understood that this prevents relative movement between the tyre wall and the wheel.

In the illustrated embodiment the end surface 118,120 of each tyre abutting member 114,116 is shaped to seat on or against the tyre wall 142. However, in alternative embodiments the end surfaces 118,120 may be provided with a face provided at an angle such that in the event of force being applied, the tyre abutting member 114,116 is adapted to nip rather than clamp the tyre wall 142 relative to the wheel rim(s). In a further embodiment, the end surface 118,120 of the tyre abutting member 114,116 may be provided with a patterned surface, for example ribbing, to aid in prevention of relative movement between the tyre wall 140 and the run flat device 102.

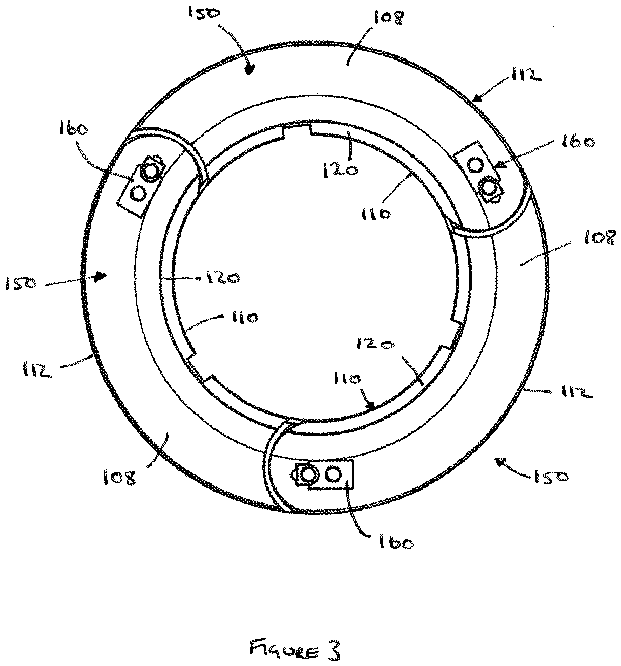

As may be seen from Figure 3, the annular body 104 is preferably formed as a split ring comprising a plurality of arcuate segments 150, for example three segments. Conveniently each of the segments 150 is of identical shape. Conveniently, a clamping means 160 located between adjacent segments 150 imparts to each a circumferential clamping force and an axial clamping force to urge the segments 150 circumferentially and axially towards one another. It will be understood that the invention functions with other numbers of arcuate segment.

It will also be understood that the invention may also be used with other wheel arrangements other than that shown. For example, it will be understood that the invention may equally be used with a three piece wheel construction, or other wheel construction, where the run flat device is capable of holding the tyre in position relative to the rotating wheel assembly.

## Claims

1. A run flat device (2,102,150) for fitting to the outer circumference of a wheel (130,132,134,136) inside an inflatable tyre, said device comprising a resilient substantially annular body (4,104) having a central axis (105) substantially corresponding to the axis of rotation of the wheel, and said annular body (4,104) comprising an inner surface (10), an outer surface (12) located at a greater distance from the central axis (105) than the inner surface, first and second side surfaces (6,8) extending from the outer surface (12) towards the inner surface (10), said annular body extending outwardly in a direction parallel to the central axis at the inner surface (10) of said body and at radially lower ends of the first and second side surfaces (6,8), to form first (14,114) and second (16,116) tyre abutting members, the inner surface (10) of the annular body (4,104) being provided with a recess (22,122) extending between the first (14,114) and second (16,116) tyre abutting members, the recess being substantially defined by planar inner surfaces (24,26,124,126) of the respective tyre abutting members, wherein the planar inner surfaces (24,26,124,126) of the respective tyre abutting members (14,16,114,116) are connected to one another and to the inner surface (10) of the annular body by curvilinear or arcuate surfaces,**characterised in that** the planar inner surfaces (24,26,124,126) are disposed at an angle to one another whereby the recess (22,122) is generally triangular in shape, and extends into the annular body less than half way.

2. A run flat device according to claim 1, in which the annular body (4,104) is provided beyond the first (14,114) and second (16,116) tyre abutting members with first and second planar side surfaces (6,8).

3. A run flat device according to claim 2, in which the first and second planar side surfaces (6,8) are substantially parallel to one another.

4. A run flat device according to any previous claim, in which the tyre abutting members (14, 16, 114, 116) are of corresponding section.

5. A run flat device according to any previous claim, in which one or both of the tyre abutting members (14, 16, 114, 116) extend uninterrupted along a substantial part of a circumferential length of the annular body (4, 104).

6. A run flat device according to claim 4, in which, one or both of the tyre abutting members (14, 16, 114, 116) extend along the circumferential length of the body (4, 104).

7. A run flat device according to any of claims 1 to 4, in which the annular body (4, 104) comprises a split ring.

8. A run flat device according to any of claims 1 to 4, in which the annular body (4, 104) comprises a plurality of arcuate segments (150).

9. A run flat device (2, 102, 150) according to claim 8, in which the annular body (4, 104) comprises three arcuate segments (150).

10. A run flat device (2, 102, 150) according to claim 8 or claim 9, in which each of the plurality of segments (150) are identical in shape.

11. A run flat device according to any of claims 8 to 10, in which a clamping means (160) is located between adjacent segments (150) and imparts to each segment (150) a circumferential clamping force and an axial clamping force to urge the segments (150) circumferentially and axially towards each other.

12. A method of forming a wheel assembly (130) comprising the steps of providing a wheel having a rim and a rear rim portion (132), a front rim portion (134) releasably securable to the rim, a run flat device (2, 102, 150) in accordance with any of
claims 1 to 11, and a tyre (140) having front and rear side walls (142);
locating the run flat device (2, 102, 150) within the tyre (140);
urging the tyre (140) and associated run flat device axially over the wheel rim; and
securing the front rim portion (134) to the wheel rim.

## Patentansprüche

1. Notlaufvorrichtung (2, 102, 150) zum Einpassen in den Außenumfang eines Rades (130, 132, 134, 136) im Innern eines Luftreifens, wobei die Vorrichtung einen nachgiebigen, im Wesentlichen ringförmigen Körper (4, 104) umfasst, der eine Mittelachse (105) aufweist, die im Wesentlichen der Drehachse des Rades entspricht, und wobei der ringförmige Körper (4, 104) Folgendes umfasst: eine Innenoberfläche (10), eine Außenoberfläche (12), die in einem größeren Abstand von der Mittelachse (105) als die Innenoberfläche befindlich ist, eine erste und zweite Seitenoberfläche (6, 8), die sich von der Außenoberfläche (12) zu der Innenoberfläche (10) hin erstrecken, wobei sich der ringförmige Körper in einer Richtung parallel zu der Mittelachse nach außen an der Innenoberfläche (10) des Körpers und an radial niedrigeren Enden der ersten und zweiten Seitenoberfläche (6, 8) erstreckt, um erste (14, 114) und zweite (16, 116) Reifenanlageelemente zu bilden, wobei die Innenoberfläche (10) des ringförmigen Körpers (4, 104) mit einer Ausnehmung (22, 122) vorgesehen ist, die sich zwischen den ersten (14, 114) und zweiten (16, 116) Reifenanlageelementen erstreckt, wobei die Ausnehmung im Wesentlichen mittels planarer Innenoberflächen (24, 26, 124, 126) der jeweiligen Reifenanlageelemente definiert ist,
wobei die planaren Innenoberflächen (24, 26, 124, 126) der jeweiligen Reifenanlageelemente (14, 16, 114, 116) miteinander und mit der Innenoberfläche (10) des ringförmigen Körpers mittels kurvenförmiger oder bogenförmiger Oberflächen verbunden sind,
**dadurch gekennzeichnet, dass** die planaren Innenoberflächen (24, 26, 124, 126) in einem Winkel zueinander angeordnet sind, wobei die Ausnehmung (22, 122) im Allgemeinen dreieckig geformt ist und sich weniger als zur Hälfte in den ringförmigen Körper hinein erstreckt.

2. Notlaufvorrichtung nach Anspruch 1, bei der der ringförmige Körper (4, 104) über die ersten (14, 114) und zweiten (16, 116) Reifenanlageelemente hinaus mit einer ersten und einer zweiten planaren Seitenoberfläche (6, 8) vorgesehen ist.

3. Notlaufvorrichtung nach Anspruch 2, bei der die erste und die zweite planare Seitenoberfläche (6, 8) im Wesentlichen parallel zueinander sind.

4. Notlaufvorrichtung nach einem beliebigen der vorstehenden Ansprüche, bei der die Reifenanlageelemente (14, 16, 114, 116) ein entsprechendes Profil aufweisen.

5. Notlaufvorrichtung nach einem beliebigen der vorstehenden Ansprüche, bei der sich eines oder beide der Reifenanlageelemente (14, 16, 114, 116) ohne Unterbrechung entlang einem wesentlichen Teil einer umfänglichen Länge des ringförmigen Körpers (4, 104) erstreckt bzw. erstrecken.

6. Notlaufvorrichtung nach Anspruch 4, bei der sich eines oder beide der Reifenanlageelemente (14, 16, 114, 116) entlang der umfänglichen Länge des Körpers (4, 104) erstreckt bzw. erstrecken.

7. Notlaufvorrichtung nach einem beliebigen der Ansprüche 1 bis 4, bei der der ringförmige Körper (4, 104) einen Spaltring umfasst.

8. Notlaufvorrichtung nach einem beliebigen der Ansprüche 1 bis 4, bei der der ringförmige Körper (4, 104) eine Vielzahl von bogenförmigen Segmenten (150) umfasst.

9. Notlaufvorrichtung (2, 102, 150) nach Anspruch 8, bei der der ringförmige Körper (4, 104) drei bogenförmige Segmente (150) umfasst.

10. Notlaufvorrichtung (2, 102, 150) nach Anspruch 8 oder Anspruch 9, bei der jedes der Vielzahl von Segmenten (150) von identischer Form ist.

11. Notlaufvorrichtung nach einem beliebigen der Ansprüche 8 bis 10, bei der sich ein Klemmmittel (160) zwischen benachbarten Segmenten (150) befindet und in jedes Segment (150) eine umfängliche Klemmkraft und eine axiale Klemmkraft einleitet, um die Segmente (150) umfänglich und axial zueinander hin zu drängen.

12. Verfahren des Bildens einer Radbaugruppe (130), umfassend die folgenden Schritte: Bereitstellen eines Rades, das Folgendes aufweist: eine Felge und einen hinteren Felgenabschnitt (132), einen vorderen Felgenabschnitt (134), der lösbar an der Felge gesichert werden kann, eine Notlaufvorrichtung (2, 102, 150) nach einem beliebigen der
Ansprüche 1 bis 11 und einen Reifen (140), der vordere und hintere Seitenwände (142) aufweist;
Positionieren der Notlaufvorrichtung (2, 102, 150) im Innern des Reifens (140);
axiales Drängen des Reifens (140) und der zugehörigen Notlaufvorrichtung über die Radfelge;
und Sichern des vorderen Felgenabschnitts (134) an der Radfelge.

## Revendications

1. Dispositif de roulage à plat (2, 102, 150) à ajuster sur la circonférence externe d'une roue (130, 132, 134, 136) à l'intérieur d'un pneumatique gonflable, ledit dispositif comprenant un corps élastique sensiblement annulaire (4, 104) ayant un axe central (105) correspondant sensiblement à l'axe de rotation de la roue, et ledit corps annulaire (4, 104) comprenant une surface interne (10), une surface externe (12) située à une plus grande distance de l'axe central (105) que la surface interne, des première et seconde surfaces latérales (6, 8) s'étendant de la surface externe (12) vers la surface interne (10), ledit corps annulaire s'étendant vers l'extérieur dans une direction parallèle à l'axe central au niveau de la surface interne (10) dudit corps et au niveau d'extrémités radialement inférieures des première et seconde surfaces latérales (6, 8) pour former des premier (14, 114) et second éléments de butée de pneumatique (16, 116), la surface interne (10) du corps annulaire (4, 104) étant munie d'un évidement (22, 122) s'étendant entre les premier (14, 114) et second (16, 116) éléments de butée de pneumatique, l'évidement étant sensiblement défini par des surfaces internes planes (24, 26, 124, 126) des éléments de butée de pneumatique respectifs, dans lequel
les surfaces internes planes (24, 26, 124, 126) des éléments de butée de pneumatique respectifs (14, 16, 114, 116) sont reliées l'une à l'autre et à la surface interne (10) du corps annulaire par des surfaces curvilignes ou arquées,
**caractérisé en ce que** les surfaces internes planes (24, 26, 124, 126) sont disposées à un angle l'une par rapport à l'autre moyennant quoi l'évidement (22, 122) est de forme généralement triangulaire, et s'étend dans le corps annulaire à moins de mi-chemin.

2. Dispositif de roulage à plat selon la revendication 1, dans lequel le corps annulaire (4, 104) est muni au-delà des premier (14, 114) et second (16, 116) éléments de butée de pneumatique de première et seconde surfaces latérales planes (6, 8).

3. Dispositif de roulage à plat selon la revendication 2, dans lequel les première et seconde surfaces latérales planes (6, 8) sont sensiblement parallèles l'une à l'autre.

4. Dispositif de roulage à plat selon une quelconque revendication précédente, dans lequel les éléments de butée de pneumatique (14, 16, 114, 116) sont de section correspondante.

5. Dispositif de roulage à plat selon une quelconque revendication précédente, dans lequel un premier ou les deux éléments de butée de pneumatique (14, 16, 114, 116) s'étend/s'étendent de manière ininterrompue le long d'une partie sensible d'une longueur circonférentielle du corps annulaire (4, 104).

6. Dispositif de roulage à plat selon la revendication 4, dans lequel, un premier ou les deux éléments de butée de pneumatique (14, 16, 114, 116) s'étend/s'étendent le long de la longueur circonférentielle du corps (4, 104).

7. Dispositif de roulage à plat selon l'une quelconque des revendications 1 à 4, dans lequel le corps annulaire (4, 104) comprend une bague fendue.

8. Dispositif de roulage à plat selon l'une quelconque des revendications 1 à 4, dans lequel le corps annulaire (4, 104) comprend une pluralité de segments arqués (150).

9. Dispositif de roulage à plat (2, 102, 150) selon la revendication 8, dans lequel le corps annulaire (4, 104) comprend trois segments arqués (150).

10. Dispositif de roulage à plat (2, 102, 150) selon la revendication 8 ou la revendication 9, dans lequel chacun de la pluralité de segments (150) est de forme identique.

11. Dispositif de roulage à plat selon l'une quelconque des revendications 8 à 10, dans lequel un moyen de serrage (160) est situé entre segments adjacents (150) et exerce sur chaque segment (150) une force de serrage circonférentielle et une force de serrage axiale de sorte à pousser les segments (150) l'un vers l'autre de manière circonférentielle et axiale.

12. Procédé de formation d'un ensemble roue (130) comprenant les étapes de
fourniture d'une roue ayant une jante et une partie de jante arrière (132), une partie de jante avant (134) pouvant être fixée de manière amovible à la jante, un dispositif de roulage à plat (2, 102, 150) selon l'une quelconque des revendications 1 à 11, et un pneumatique (140) ayant des parois latérales avant et arrière (142) ;
disposer le dispositif de roulage à plat (2, 102, 150) à l'intérieur du pneumatique (140) ;
pousser le pneumatique (140) et le dispositif de roulage à plat associé axialement au-dessus de la jante ; et
fixer la partie de jante avant (134) à la jante de roue.
